# EUROPEAN PATENT SPECIFICATION

(11) **EP 3 575 072 B1**
(45) Date of publication and mention of the grant of the patent: **06.07.2022**
(21) Application number: 18181036.7
(22) Date of filing: 29.06.2018
(51) Int. Cl.: B29C 70/68, B29C 70/70, B29C 70/72, B32B 5/24, B29D 99/00

(54) **LONG FIBER SHEET MOLDING COMPOUND AND MANUFACTURING METHOD THEREOF**
LANGFASERPLATTENFORMMASSE UND HERSTELLUNGSVERFAHREN DAFÜR
COMPOSÉ DE MOULAGE EN FEUILLE À LONGUES FIBRES ET SON PROCÉDÉ DE FABRICATION

(30) Priority: 30.05.2018 TW 107118400
(43) Date of publication of application: 04.12.2019
(73) Proprietor: UHT Unitech Co., Ltd, 32061 Taoyuan City (TW)
(72) Inventor: LAI, CHIH-LUNG, 32061 TAOYUAN CITY (TW); WANG, CHIH-YUNG, 32061 Taoyuan City (TW)
(74) Representative: Lang, Christian

(56) References cited:
- WO-A1-82/04456
- WO-A1-93/04859
- US-A- 3 535 180
- US-A- 4 087 577
- US-A- 4 469 543

## Description

### BACKGROUND

### 1. Technical Field

The present disclosure relates to a fiber sheet molding compound (or "fiber-filled sheet molding compound"), in particular, to a long fiber sheet molding compound (or "long fiber-filled sheet molding compound") and a manufacturing method, which are capable of efficiency reducing a fiber content to decrease a manufacturing cost, a structure thickness and a weight.

### 2. Description of Related Art

A fiber sheet molding compound is formed by a fiber material and a resin material, and a strength, a rigidity and a dimension stability thereof are much better than those of the resin material, such that the fiber sheet molding compound can be utilized for manufacturing various kinds of products. Therefore, the demands of the sheet shaped fiber in various fields increase yearly. For example, document US 3,535,180 A discloses a conventional fiber sheet molding compound formed by a fiber material and plastic materials and methods of making the same, wherein the fiber material is a textile network of coated yarns which are coating-fused at their intersections and are covered by layers of plastic materials on both sides, wherein the yarns of the textile network define two different sets of parallel, spaced yarns. US 4469543A discloses a long fiber sheet molding compound.

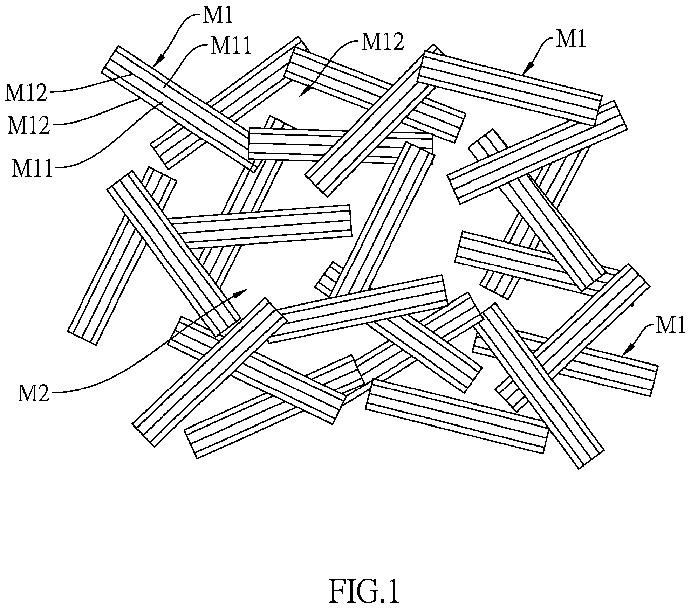

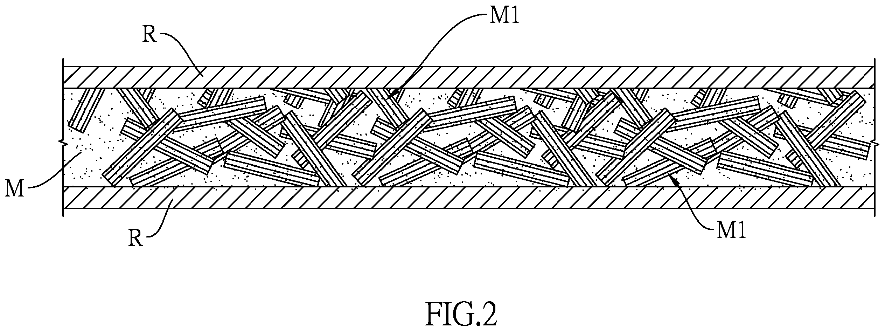

Since a usage of the fiber sheet molding compound is wide, not only a quality thereof should be controlled seriously, but also a manufacturing cost thereof should be decreased under a case that an anti-bending strength and an anti-bending modulus of the fiber sheet molding compound should be maintained. As shown in FIG. 1 and FIG. 2, the fiber sheet molding compound produced by a conventional process comprises two resin layers R formed by a resin material and a hybrid layer M disposed between the two resin layers R, wherein the hybrid layer M is formed the resin material and a plurality of staple fiber beams M1. Each of the staple fiber beams M1 is formed by adhering parallel staple fibers M11 and at least one of slurries M12, and each of the staple fiber beams M1 has a sheet shape. Thus, the staple fibers M11 are not twisted to each other, and the staple fiber beams M1 are not twisted to each other. The staple fiber beam M1 can be formed by cutting a plurality of filament fiber beams, and since the filament fiber beams are covered by the slurry M12, an environmental pollution and a human body breathing damage are caused by slurry particles generated in a cutting process. In addition, when manufacturing the fiber sheet molding compound, the staple fiber beams M1 can be sprayed on a surface of a lower one of the two resin layers R. During the spraying process, the staple fiber beams M1 may be collided to each other to generate the slurry particles, and thus the above damage and pollution are caused. Further, the staple fiber beams M1 may be aggregated due to static electricity generated by friction, and thus the staple fiber beams M1 in practice cannot uniformly distribute on the surface of the resin layer R. Therefore, larger pores M2 are formed to result a loose structure of the fiber sheet molding compound, which causes a defect that physic properties in different regions of the fiber sheet molding compound are not stable and uniform.

The above fiber sheet molding compound having the high strength, the high rigidity and the high dimension stability further has the disadvantages as follows: (1) lengths the staple fiber beams adopted by the hybrid layer mostly are 25mm through 30mm, and the staple fiber beams distributed independently without being twisted, such that if a number of the staple fiber beams is not enough, the pores between the staple fiber beams may be too large to make a structure strength of the hybrid layer not sufficient; to achieve certain levels of the anti-bending strength and the anti-bending modulus, a large amount of staple fiber beams are required to reduce a pore rate, it causes a staple fiber content of the fiber sheet molding compound should be 30wt% through 50wt%, and this increases a weight and a thickness of the fiber sheet molding compound; and (2) particles of the staple fibers and the slurries may be generated and diffused in air easily during the post cutting process of the fiber sheet molding compound, and thus it may cause a health damage of a processor if the processor inhale the particles incautiously.

### SUMMARY

To solve one of the problems in the related art, one objective of the present disclosure is to provide a long fiber sheet molding compound according to claim 1 and a manufacturing method of the long fiber sheet molding compound according to claim 13, which are capable of efficiently reducing a fiber content and further decreasing a manufacturing cost, a structure thickness and a weight of the long fiber sheet molding compound.

According to one objective of the present disclosure, a long fiber sheet molding compound as defined in claim 1 is provided, which comprises: a first resin layer, a second resin layer and a hybrid layer, the hybrid layer being disposed between the first resin layer and the second resin layer, and the hybrid layer being coupled to the first resin layer and the second resin layer, wherein the hybrid layer comprises an adhesion resin layer and a fiber mesh structure; wherein the fiber mesh structure is covered by the adhesion resin layer, the fiber mesh structure is formed by a plurality of fiber silks being discontinuous and twisted to each other, and the fiber silks form a plurality fiber silk gaps therebetween; the fiber silk gaps are filled with the adhesion resin layer, and the fiber silks are covered by the adhesion resin layer; an average length of the fiber silks is larger than or equal to 35 mm, and the fiber silks are twisted to each other to have a non-directional distribution, which means that the fiber mesh structure is projected to a two-dimensional plane and projections of the fiber silks being projected to the two-dimensional plane disorderedly extend to arbitrary directions. According to the present invention, a total fiber content of the long fiber sheet molding compound is 5 wt% to 30 wt % in respect to the long fiber sheet molding compound.

According to one objective of the present disclosure, a manufacturing method of the above long fiber sheet molding compound is provided, which comprises steps as follows: a material providing step, an adhesion step and a lamination step.

The long fiber sheet molding compound and the manufacturing method thereof provided by the present disclosure have advantages as follows: the fiber silks are twisted to each other to have the non-directional distribution, and thus an anti-slicing strength, an anti-bending strength and an anti-bending modulus of the long fiber sheet molding compound can be uniform in any direction to resist a breaking force from any direction; without a large amount of the fiber silks, a pore rate of the long fiber sheet molding compound can be still efficiently reduced, and therefore, not only the manufacturing cost can be decreased, but also the thickness and the weight of the whole structure can be reduced.

### BRIEF DESCRIPTION OF THE DRAWINGS

The accompanying drawings are included to provide a further understanding of the present disclosure and are incorporated in and constitute a part of this specification. The drawings illustrate exemplary embodiments of the present disclosure and, together with the description, serve to explain the principles of the present disclosure.
FIG. 1 is a schematic diagram showing staple fiber beams in a conventional sheet shaped molding plastic.
FIG. 2 is a schematic diagram showing the conventional sheet shaped molding plastic.
FIG. 3 is a schematic diagram showing a long fiber sheet molding compound of the present disclosure.
FIG. 4 is a schematic diagram showing a fiber mesh structure adopted by the long fiber sheet molding compound of the present disclosure.
FIG. 5 is a schematic diagram showing materials adopted for manufacturing the long fiber sheet molding compound of the present disclosure.
FIG. 6 is a schematic diagram showing flows of a manufacturing method of the long fiber sheet molding compound of the present disclosure.
FIG. 7 is a flow chart of manufacturing method of the long fiber sheet molding compound of the present disclosure.

### DESCRIPTION OF THE EXEMPLARY EMBODIMENTS

To facilitate understanding of the present disclosure, the following description is provided to illustrate exemplary embodiments of the present disclosure together with the drawings. It is noted that the following description and drawings are used for illustration of the present disclosure and not intended to limit the actual dimension, ratio and alignment.

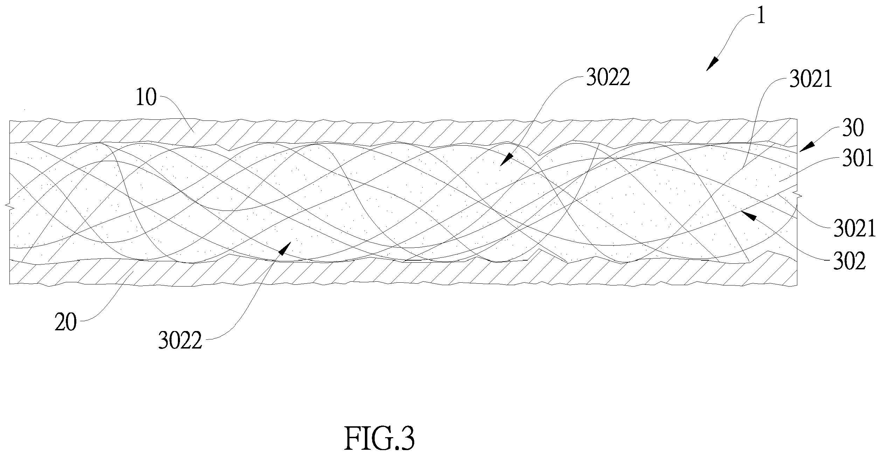

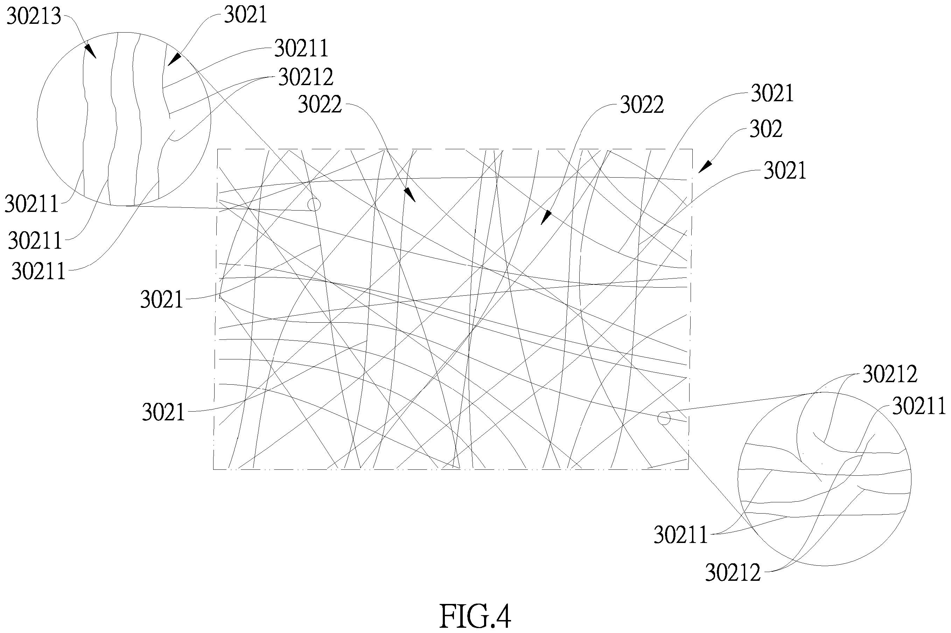

Referring to FIG. 3 and FIG. 4, a long fiber sheet molding compound 1 of the present disclosure comprises a first resin layer 10, a second resin layer 20 and a hybrid layer 30, the hybrid layer 30 is disposed between the first resin layer 10 and the second resin layer 20 and coupled to the first resin layer 10 and the second resin layer 20, and the hybrid layer 30 at least comprises an adhesion resin layer 301 and a fiber mesh structure 302. The fiber mesh structure 302 is covered by the adhesion resin layer 301, the fiber mesh structure 302 is formed by a plurality of fiber silks 3021 being discontinuous and twisted to each other, and the fiber silks 3021 form a plurality fiber silk gaps 3022 therebetween. The fiber silk gaps 3022 are filled with the adhesion resin layer 301, and the fiber silks 3021 are covered by the adhesion resin layer 301. An average length of the fiber silks 3021 is larger than or equal to 35mm, and less than or equal to a predetermined average length so as to form the discontinuous fiber silks 3021, for example, the average length of the fiber silks 3021 is less than or equal to 500mm; preferably, the length of each fiber silk 3021 is larger than or equal to 35mm and less than or equal to 500mm. In addition, the limitation of the range in the present disclosure may always comprise end values.

Preferably, the fiber silks 3021 are twisted to each other to have a non-directional distribution. The non-directional distribution means that the fiber mesh structure 302 is projected to a two-dimensional plane (not shown in drawings) and projections of the fiber silks 3021 being projected to the two-dimensional plane disorderedly and randomly extend to arbitrary directions. The average length of the fiber silks 3021 is larger than or equal to 35mm, and thus physic properties of the long fiber sheet molding compound 1 in each direction are uniform. In other words, an anti-slicing strength, an anti-bending strength and an anti-bending modulus of the long fiber sheet molding compound 1 can be uniform in any direction to resist a breaking force from any direction.

The fiber silk 3021 can comprise single one fiber 30211 or a plurality of fibers 30211. For example, the fiber silk 3021 may comprise one fiber 30211, 100 fibers 30211, or 1 through 100 fibers. In the embodiment in which the fiber silk 3021 comprises the fibers 30211, the fiber silks 3021 are not covered by the slurry, and the fibers 30211 are formed to have fiber gaps 30213 therebetween, such that the adhesion resin layer 301 can infiltrate in and fill the fiber gaps 30213 between the fibers 30211 to cover the fibers 30211. Therefore, the long fiber sheet molding compound 1 is further enhanced. In addition, at least one of the fibers 30211 in the fiber silk 3021 is formed to have two independent naps 30212, and the two naps 30212 are formed to have the non-directional distribution. The adhesion resin layer 301 further covers the naps 30212, and thus the anti-slicing strength, the anti-bending strength and the anti-bending modulus of the long fiber sheet molding compound 1 can be uniform and enhanced in any direction. Preferably, the fibers 30211 have the plurality of naps 30212.

The fiber silks 3021 are twisted to each other to form the fiber mesh structure 302 with a pore rate. The pore rate is calculated as follows, the fiber mesh structure 302 is projected to the two dimensional plane, then the a total area of the fiber silk gaps 3022 within an unit area of the projection on the two dimensional plane is obtained, and then the total area of the fiber silk gaps 3022 is divided by the unit area to obtain the pore rate. Or alternatively, the pore rate is calculated as follows, the fiber mesh structure 302 is projected to the two dimensional plane, then the a total area of the fiber silk gaps 3022 and the fiber gaps 30213 within an unit area of the projection on the two dimensional plane is obtained, and then the total area of the fiber silk gaps 3022 and the fiber gaps 30213 is divided by the unit area to obtain the pore rate.

It is noted that, at least one of the fibers 30211 in at least one of the fiber silks 3021 and at least of the fibers 30211 in at least another one of the fiber silks 3021 are twisted to each other to have the non-directional distribution. At least one of the naps 30212 in at least one of the fiber silks 3021 and at least one of the fibers 30211 in at least another one of the fiber silks 3021 are twisted to each other to have the non-directional distribution. Preferably, at least one of the naps 30212 in at least one of the fiber silks 3021 and at least one of the naps 30211 in at least another one of the fiber silks 3021 are twisted to each other to have the non-directional distribution. Thus, the pore rate of the fiber mesh structure 302 can be decreased, and thus the anti-slicing strength, the anti-bending strength and the anti-bending modulus of the long fiber sheet molding compound 1 can be more uniform and enhanced in any direction.

The above fiber silks 3021 or the fibers 30211 preferably can be selected from carbon fibers, glass fibers or recycled fibers, and diameters of the fiber silks 3021 can be 3µm through 30µm. In the embodiment in which the fiber silks 3021 or the fibers 30211 are carbon fibers, the diameters of the carbon fibers are 3µm through 8µm. In the embodiment in which the fiber silks 3021 or the fibers 30211 are glass fibers, the diameters of the glass fibers are 20µm through 35µm.

Each of the adhesion resin layer 301, the first resin layer 10 and the second resin layer 20 is independently formed by a selection of a thermosetting resin or a thermoplastic resin. The thermosetting resin can comprise an epoxy resin, a vinyl resin or an unsaturated resin. Each of the adhesion resin layer 301, the first resin layer 10 and the second resin layer 20 independently comprises a solid filler, and the solid filler is selected from at least one in a group comprising calcium carbonate, magnesium oxide, zinc stearate, aluminum hydroxide, antimony oxide, polybrominated diphenyl ethers, polybrominated biphenyls, tetrabromobisphenol A, hexabromocyclododecane and N,N-Dimethylaniline. The adhesion resin layer 301, the first resin layer 10 and the second resin layer 20 are made of by a same material or different materials.

According to the above descriptions, the fiber mesh structure 302 comprises the fiber silks 3021 having the average length larger than or equal to 35mm, and the fiber silks 3021, the fibers 30211 and the naps 30212 are twisted to each other to have the non-directional distribution. Thus, the pore rate of the fiber mesh structure 302 can be much decreased, and the anti-slicing strength, the anti-bending strength and the anti-bending modulus of the long fiber sheet molding compound 1 can be uniform and enhanced in any direction. Accordingly, under the case that the anti-bending strength and the anti-bending modulus of the long fiber sheet molding compound 1 are the same as those of the conventional sheet shaped molding plastic, the total fiber content of the long fiber sheet molding compound 1 is 5 wt% to 30 wt % in respect to the long fiber sheet molding compound 1. The content of the adhesion resin layer 301, the first resin layer 10 and the second resin layer 20 is 95 wt% through 70 wt% in respect to the long fiber sheet molding compound 1. Thus, the thickness of the long fiber sheet molding compound 1 can be maintained 0.5mm through 3mm, preferably, less than 1mm. Compared to the prior art, the long fiber sheet molding compound 1 decreases 40 % through 50 % weight. The total fiber content means the content of the fiber mesh structure 302 in the long fiber sheet molding compound 1, and the fiber mesh structure 302 certainly comprises the fiber silks 3021, the fibers 30211 and the naps 30212.

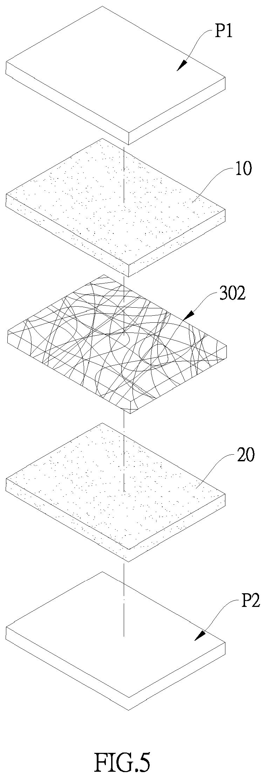

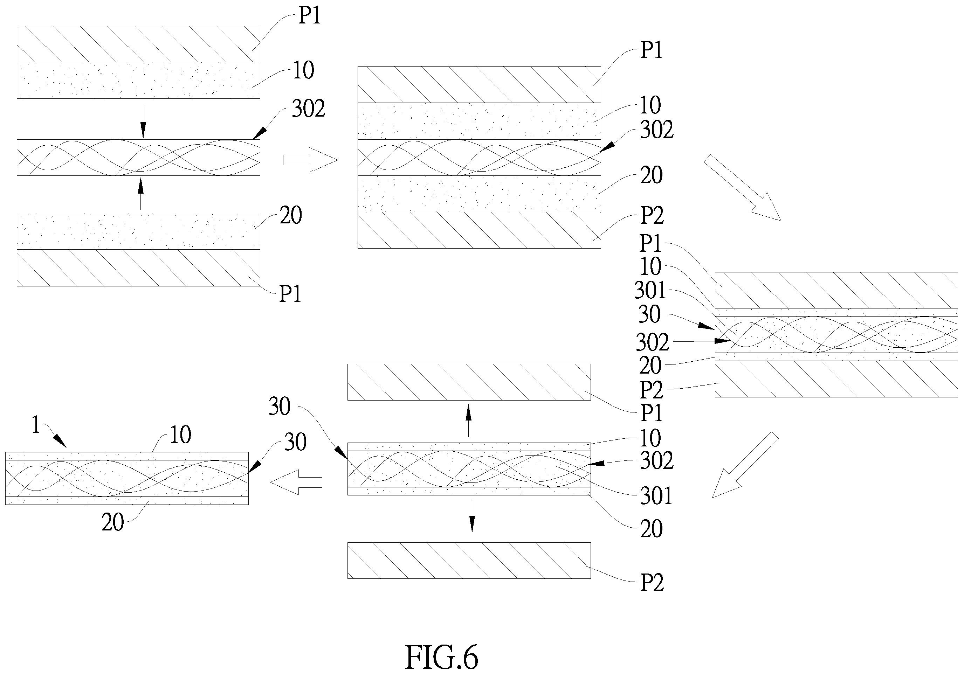

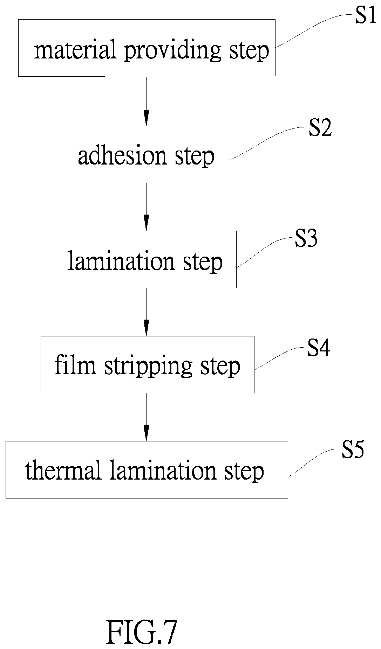

According to the above descriptions, the present disclosure provides a manufacturing method of the long fiber sheet molding compound. Refer to FIG. 5 through FIG. 7, materials used in the process and product of the long fiber sheet molding compound 1 comprise: a first plastic film P1, the first resin layer 10, the fiber mesh structure 302, the second resin layer 20 and a second plastic film P2. By using the first plastic film PI and the second plastic film P2, the first resin layer 10, the fiber mesh structure 302 and the second resin layer 20 are laminated to form the first resin layer 10, the hybrid layer 30 and the second resin layer 20 in sequence. Each of the first plastic film PI and the second plastic film P2 is independently selected from at least one in a group comprising polyethylene terephthalate, high density polyethylene, low density polyethylene, polyvinyl chloride, polypropylene, polystyrene, polycarbonate and polylactic acid.

The manufacturing method of the long fiber sheet molding compound comprises the following steps:
a material providing step S1: providing the first plastic film PI the first resin layer 10, the fiber mesh structure 302, the second resin layer 20 and the second plastic film P2, wherein the first resin layer 10 is cladded in a bottom surface of the first plastic film P1, and the second resin layer 20 is cladded in a top surface of the second plastic film P2;
an adhesion step S2: adhering the first resin layer 10 to a top surface of the fiber mesh structure 302, and adhering the second resin layer 20 to a bottom surface of the fiber mesh structure 302; and
a lamination step S3: applying pressing forces to a top surface of the first plastic film PI and a bottom surface of the second plastic film P2, such that a portion of the first resin layer 10 forms the adhesion resin layer 301 and covers the fiber mesh structure 302 to form the hybrid layer 30, or alternatively, a portion of the second resin layer 20 forms the adhesion resin layer 301 and covers the fiber mesh structure 302 to form the hybrid layer 30, or alternatively, the portion of the first resin layer 10 and the portion of the second resin layer 20 contact to each other to form the adhesion resin layer 301, and cover the fiber mesh structure 302 to form the hybrid layer 30.

Basically, after executing the material providing step S1, the adhesion step S2 and the lamination step S3, the long fiber sheet molding compound is formed. Next, when using the long fiber sheet molding compound, a film stripping step S4 can be performed. The film stripping step S4 strips the first plastic film PI away from the first resin layer 10, and further strips the second plastic film P2 away from the second resin layer 20, so as to form the long fiber sheet molding compound 1.

Of course, as mentioned above, when one of the adhesion resin layer 301, the first resin layer 10 and the second resin layer 20 is the thermosetting resin material, a thermal lamination step S5 can be performed after the film stripping step S4. The thermal lamination step S5 performs a thermal lamination process on the long fiber sheet molding compound 1 obtained from the film stripping step S4. For example, one of the adhesion resin layer 301, the first resin layer 10 and the second resin layer 20 is vinyl resin, and in the thermal lamination step S5, a thermal lamination temperature is 100 degrees Celsius through 300 degrees Celsius, a thermal lamination pressure is set to be 20 kgf/cm² through 200 kgf/cm², and a thermal lamination time is set to be 0.5 min through 10 min.

According to the above manufacturing method of the long fiber sheet molding compound, comparative example 1 and embodiments 1 through 7 are implemented, and results thereof are listed in Table 1. In comparative example 1 and embodiments 1 through 7, the adhesion resin layer 301, the first resin layer 10 and the second resin layer 20 are vinyl resin, the thermal lamination temperature is 130 degrees Celsius through 300 degrees Celsius, the thermal lamination pressure is set to be 150 kgf/cm², the thermal lamination time is set to be 2min, and the fiber mesh structure 302 is formed by carbon fibers.

**Table 1**

| | A | B | C | D | E | F | G | H |
|---|---|---|---|---|---|---|---|---|
| length of fiber silk (mm) | 25 | 35 | 35 | 100 | 250 | 500 | 35 | 35 |
| total fiber content (wt%) | 30 | 30 | 10 | 10 | 10 | 10 | 10 | 5 |
| weight (g/m²) | 4000 | 400 0 | 400 0 | 2000 | 2000 | 200 0 | 115 0 | 115 0 |
| width x | 15x4 | 15x | 15x | 15x40 | 15x40 | 15x | 15x | 15x |
| length x thickness (mm) | 0x2 | 40x 2 | 40x 2 | x2 | x2 | 40x 2 | 40x 0.9 | 40x 0.9 |
| anti-bending strength (MPa) | 150 | 225 | 188 | 195 | 210 | 235 | 171 | 160 |
| anti-bending modulus (GPa) | 8 | 14 | 9 | 10 | 12 | 15 | 8 | 8 |

| | | | | | | | | |
|---|---|---|---|---|---|---|---|---|
| A: comparative example 1; B: embodiment 1; C: embodiment 2; D: embodiment 3; E: embodiment 4; F: embodiment 5; G: embodiment 6; H: embodiment 7. | | | | | | | | |

In Table 1, the long fiber sheet molding compounds in comparative example 1 and embodiment 1 have the same weight of 4000 g/m² and the same total fiber content of 30 wt%. The difference between comparative example 1 and embodiment 1 is that the fiber silks in embodiment 1 have the average length of 35 mm while the fiber silks in comparative example 1 have the average length of 25 mm. Since embodiment 1 adopts the fiber silks with the larger average length, the phenomenon that the fiber silks, the fibers and the naps are twisted to each other to have the non-directional distribution in embodiment 1 is more than that in comparative example 1. Therefore, the anti-bending strength in embodiment 1 is 225 MPa and the anti-bending modulus in embodiment 1 is 14 GPa, which are far larger than the anti-bending strength of 100 MPa and the anti-bending modulus of 7 GPa specified by ISO14125. The anti-bending strength of 225 MPa and the anti-bending modulus of 14 GPa in embodiment 1 are larger than the anti-bending strength of 150 MPa and the anti-bending modulus of 8 GPa in comparative example 1. Thus, it proofs that when the average length of the fiber silks are larger than or equal to 35 mm, the features that the fiber silks, the fibers and the naps are sufficiently twisted to each other to have the non-directional distribution for enhancing the anti-bending strength and the anti-bending modulus of the long fiber sheet molding compound can be obtained.

The difference between embodiments 2 and comparative example 1 is that the total fiber content in embodiment 2 is decreased to 10 wt%, but the average length of the fiber silks is still 35 mm. However, the anti-bending strength of 188 MPa and the anti-bending modulus of 9 GPa in embodiment 2 are larger than the anti-bending strength of 150 MPa and the anti-bending modulus of 8 GPa in comparative example 1. It proofs when the average length of the fiber silks is larger than or equal to 35 mm, the total fiber content can be decreased to 10 wt% (i.e. the reduction of the total content can be achieved) to save cost.

Next, take embodiment as a reference base, under the case that the total fiber content is maintained 10 wt%, embodiments 2 through 5 adopt the fiber silks with the average lengths of 35 mm, 100 mm, 250 mm and 500 mm respectively. Obviously, when the average length of the adopted fiber silks is increased, the phenomenon that the fiber silks, the fibers and the naps are twisted to each other to have the non-directional distribution is more obvious, thus enhancing the anti-bending strength and the anti-bending modulus of the long fiber sheet molding compound. Accordingly, the anti-bending strength and the anti-bending modulus in embodiment 3 are respectively 195 MPa and 10 GPa, he anti-bending strength and the anti-bending modulus in embodiment 4 are respectively 210 MPa and 12 GPa, and the anti-bending strength and the anti-bending modulus in embodiment 5 are respectively 235 MPa and 15 GPa. The anti-bending strength and the anti-bending modulus in each of embodiments 3 through 5 are far larger than those specified in ISO14125, and also larger than those in comparative example 1 and embodiments 1, 2.

Among the above embodiments, since the phenomenon that the fiber silks, the fibers and the naps are twisted to each other to have the non-directional distribution in embodiment 5 is most obvious, the anti-bending modulus (being 15 GPa) in embodiment 5 using the total fiber content of 10 wt% is larger than the anti-bending modulus (14 GPa) in embodiment 1 using the total fiber content of 30 wt% and the anti-bending modulus (8GPa) in comparative example 1 using the total fiber content of 30 wt%, and the similar result of the anti-bending strength can be obtained without redundant descriptions. Therefore, it can proof the larger the average length of the fiber silks is, the more obvious the phenomenon that the fiber silks, the fibers and the naps are twisted to each other to have the non-directional distribution is. Accordingly, the total fiber content can be reduced, and the anti-bending strength and the anti-bending modulus can be enhanced, so as to achieve the effect of reducing cost.

Compared to comparative example 1, the total fiber content in embodiment 6 is decreased to 10 wt%, the average length of the fiber silks in embodiment 6 is 35 mm, the weight of the long fiber sheet molding compound in embodiment 6 is decreased to 1150 g/m², and the thickness of the long fiber sheet molding compound in embodiment 6 is decreased to 0.9 mm from 2.0 mm. However, the anti-bending strength of 171 MPa in embodiment 6 is larger than the anti-bending strength of 150 MPa in comparative example 1. Thus, it proofs that when the average length of the fiber silks adopted in the long fiber sheet molding compound is larger than or equal to 35 mm, the total fiber content can be decreased to 10 wt%. Accordingly, the weight and the thickness of the long fiber sheet molding compound can be reduced to save cost and widely applied to thin and light products.

Compared to comparative example 1, the total fiber content in embodiment 7 is decreased to 5 wt%, the average length of the fiber silks in embodiment 7 is 35 mm, the weight of the long fiber sheet molding compound in embodiment 7 is decreased to 1150 g/m², and the thickness of the long fiber sheet molding compound in embodiment 7 is decreased to 0.9 mm from 2.0 mm. However, the anti-bending strength of 160 MPa in embodiment 7 is larger than the anti-bending strength of 150 MPa in comparative example 1. Thus, it proofs that when the average length of the fiber silks adopted in the long fiber sheet molding compound is larger than or equal to 35mm, the total fiber content can be decreased to 5 wt%. Accordingly, the weight and the thickness of the long fiber sheet molding compound can be reduced to save cost and widely applied to thin and light products.

## Claims

1. A long fiber sheet molding compound, comprising: a first resin layer (10), a second resin layer (20) and a hybrid layer (30); the hybrid layer (30) is disposed between the first resin layer (10) and the second resin layer (20), and the hybrid layer (30) is coupled to the first resin layer (10) and the second resin layer (20); the hybrid layer (30) comprises an adhesion resin layer (301) and a fiber mesh structure (302);
wherein the fiber mesh structure (302) is covered by the adhesion resin layer (301), the fiber mesh structure (302) is formed by a plurality of fiber silks (3021) being discontinuous and twisted to each other, and the fiber silks (3021) form a plurality fiber silk gaps (3022) therebetween; the fiber silk gaps (3022) are filled with the adhesion resin layer (301), and the fiber silks (3021) are covered by the adhesion resin layer (301); an average length of the fiber silks (3021) is larger than or equal to 35mm;
**characterized in that**
the fiber silks (3021) are twisted to each other to have a non-directional distribution, wherein the non-directional distribution means that the fiber mesh structure (302) is projected to a two-dimensional plane and projections of the fiber silks (3021) being projected to the two-dimensional plane disorderedly extend to arbitrary directions; and
a total fiber content of the long fiber sheet molding compound (1) is 5 wt% to 30 wt % in respect to the long fiber sheet molding compound (1).

2. The long fiber sheet molding compound according to claim 1, wherein the average length of the fiber silks (3021) is less than or equal to 500mm.

3. The long fiber sheet molding compound according to claim 1, wherein the fiber silks (3021) comprises a plurality of fibers (30211), the fibers (30211) have a plurality of fiber gaps (30213) therebetween, and the adhesion resin layer (301) fills the fiber gaps (30213) between the fibers (30211) to cover the fibers (30211).

4. The long fiber sheet molding compound according to claim 3, wherein at least one of the fibers (30211) associated with the fiber silk (3021) is formed to have two naps (30212) being independent to each other.

5. The long fiber sheet molding compound according to claim 4, wherein the naps (30212) are formed to have the non-directional distribution.

6. The long fiber sheet molding compound according to claim 5, wherein the fibers (30211) have the naps (30212).

7. The long fiber sheet molding compound according to claim 3, wherein at least one of the fiber silks (3021) and at least another one of the fiber silks (3021) are twisted to each other to have the non-directional distribution.

8. The long fiber sheet molding compound according to claim 4, wherein at least one of the naps (30212) associated with at least one of the fiber silks (3021) and at least one of the fibers associated with at least another one of the fiber silks (3021) are twisted to each other to have the non-directional distribution.

9. The long fiber sheet molding compound according to claim 4, wherein at least one of the naps (30212) associated with at least one of the fiber silks (3021) and at least one of the naps (30212) associated with at least another one of the fiber silks (3021) are twisted to each other to have the non-directional distribution.

10. The long fiber sheet molding compound according to claim 1, wherein the fiber silks (3021) are selected from carbon fibers or glass fibers.

11. The long fiber sheet molding compound according to claim 1, wherein the adhesion resin layer (301), the first resin layer (10) and the second resin layer (20) are made of by a same material or different materials.

12. The long fiber sheet molding compound according to claim 1, wherein the diameters of the fiber silks (3021) are 3µm through 30µm.

13. A manufacturing method of the long fiber sheet molding compound (1) according to claim 1, comprising:
a material providing step (S1): providing a first plastic film (P1), the first resin layer (10), the fiber mesh structure (302), the second resin layer (20) and a second plastic film (P2), wherein the first resin layer (10) is cladded in a bottom surface of the first plastic film (P1), and the second resin layer (20) is cladded in a top surface of the second plastic film (P2);
an adhesion step (S2): adhering the first resin layer (10) to a top surface of the fiber mesh structure (302), and adhering the second resin layer (20) to a bottom surface of the fiber mesh structure (302); and
a lamination step (S3): applying pressing forces to a top surface of the first plastic film (P1) and a bottom surface of the second plastic film (P2), such that a portion of the first resin layer (10) forms the adhesion resin layer (301) and covers the fiber mesh structure (302) to form the hybrid layer (30), or alternatively, a portion of the second resin layer (20) forms the adhesion resin layer (301) and covers the fiber mesh structure (302) to form the hybrid layer (30), or alternatively, the portion of the first resin layer (10) and the portion of the second resin layer (20) contact to each other to form the adhesion resin layer (301), and cover the fiber mesh structure (302) to form the hybrid layer (30).

## Patentansprüche

1. Langfaserplatten-Formmasse, umfassend: eine erste Harzschicht (10), eine zweite Harzschicht (20) und eine Hybridschicht (30), wobei die Hybridschicht (30) zwischen der ersten Harzschicht (10) und der zweiten Harzschicht (20) angeordnet ist und wobei die Hybridschicht (30) mit der ersten Harzschicht (10) und der zweiten Harzschicht (20) verbunden ist, wobei die Hybridschicht (30) eine Adhäsionsharzschicht (301) und eine Fasernetzstruktur (302) umfasst, wobei die Fasernetzstruktur (302) mit der Adhäsionsharzschicht (301) bedeckt ist, die Fasernetzstruktur (302) aus einer Vielzahl von Faserseiden (3021) gebildet ist, die diskontinuierlich sind und zueinander verdrillt sind, wobei die Faserseiden (3021) zwischen sich eine Vielzahl von Faserseidenfugen (3022) bilden, wobei die Faserseidenfugen (3022) mit der Adhäsionsharzschicht (301) gefüllt sind und die Faserseiden (3021) mit der Adhäsionsharzschicht (301) bedeckt sind, wobei eine durchschnittliche Länge der Faserseiden (3021) größer als oder gleich 35 mm ist,
**dadurch gekennzeichnet, dass**
die Faserseiden (3021) zueinander verdrillt sind, um eine ungerichtete Verteilung zu haben, wobei die ungerichtete Verteilung bedeutet, dass die Fasernetzstruktur (302) auf eine zweidimensionale Ebene projiziert wird und Projektionen der Faserseiden (3021), die auf die zweidimensionale Ebene projiziert werden, sich ungeordnet in beliebige Richtungen erstrecken, und ein Gesamtfasergehalt der Langfaserplatten-Formmasse (1) 5 bis 30 Gewichtsprozent, bezogen auf die Langfaserplatten-Formmasse (1), beträgt.

2. Langfaserplatten-Formmasse nach Anspruch 1, bei welcher die durchschnittliche Länge der Faserseiden (3021) weniger als oder gleich 500 mm ist.

3. Langfaserplatten-Formmasse nach Anspruch 1, bei welcher die Faserseiden (3021) eine Vielzahl von Fasern (30211) umfassen, wobei die Fasern (30211) zwischen sich eine Vielzahl von Faserfugen (30213) aufweisen, wobei die Adhäsionsharzschicht (301) die Faserfugen (30213) zwischen den Fasern (30211) füllt, um die Fasern (30211) zu bedecken.

4. Langfaserplatten-Formmasse nach Anspruch 3, bei welcher mindestens eine der mit der Faserseide (3021) verbundenen Fasern (30211) so geformt ist, dass sie zwei voneinander unabhängige Noppen (30212) aufweist..

5. Langfaserplatten-Formmasse nach Anspruch 4, bei welcher die Noppen (30212) so gebildet sind, dass sie die ungerichtete Verteilung aufweisen.

6. Langfaserplatten-Formmasse nach Anspruch 5, bei welcher die Fasern (30211) die Noppen (30212) aufweisen.

7. Langfaserplatten-Formmasse nach Anspruch 3, bei welcher mindestens eine der Faserseiden (3021) und mindestens eine andere der Faserseiden (3021) zueinander verdrillt sind, um die ungerichtete Verteilung aufzuweisen.

8. Langfaserplatten-Formmasse nach Anspruch 4, bei welcher mindestens eine der Noppen (30212), die mit mindestens eine der Faserseiden (3021) verbunden ist, und mindestens eine der Fasern, die mit mindestens einer anderen der Faserseiden (3021) verbunden ist, zueinander verdrillt sind, um die ungerichtete Verteilung aufzuweisen.

9. Langfaserplatten-Formmasse nach Anspruch 4, bei welcher mindestens eine der Noppen (30212), die mit mindestens eine der Faserseiden (3021) verbunden ist, und mindestens eine der Noppen (30212), die mit mindestens einer anderen der Faserseiden (3021) verbunden ist, zueinander verdrillt sind, um die ungerichtete Verteilung aufzuweisen.

10. Langfaserplatten-Formmasse nach Anspruch 1, bei welcher die Faserseiden (3021) aus Kohlenstofffasern oder Glasfasern ausgewählt sind.

11. Langfaserplatten-Formmasse nach Anspruch 1, bei welcher die Adhäsionsharzschicht (301), die erste Harzschicht (10) und die zweite Harzschicht (20) aus demselben oder verschiedenen Materialien hergestellt sind.

12. Langfaserplatten-Formmasse nach Anspruch 1, bei welcher die Durchmesser der Faserseiden (3021) 3 mm bis 30 mm betragen.

13. Herstellverfahren der Langfaserplatten-Formmasse (1) nach Anspruch 1, umfassend:
einen Schritt zur Materialbereitstellung (S1): Bereitstellung einer ersten Plastikfolie (P1), der ersten Harzschicht (10), der Fasernetzstruktur (302), der zweiten Harzschicht (20) und einer zweiten Plastikfolie (P2), wobei die erste Harzschicht (10) an eine Unterseite der ersten Plastikfolie (P1) plattiert ist, während die zweite Harzschicht (20) an eine Oberseite der zweiten Plastikfolie (P2) plattiert ist;
einen Adhäsionsschritt (S2): Anhaften der ersten Harzschicht (10) an eine Oberseite der Fasernetzstruktur (302) und Anhaften der zweiten Harzschicht (20) an eine Unterseite der Fasernetzstruktur (302); und
einen Laminierschritt (S3): Aufbringen von Druckkräften auf eine Oberseite der ersten Plastikfolie (P1) und auf eine Unterseite der zweiten Plastikfolie (P2), so dass ein Teil der ersten Harzschicht (10) die Adhäsionsharzschicht (301) bildet und die Fasernetzstruktur (302) bedeckt, um die Hybridschicht (30) zu bilden, oder alternativ ein Teil der zweiten Harzschicht (20) die Adhäsionsharzschicht (301) bildet und die Fasernetzstruktur (302) bedeckt, um die Hybridschicht (30) zu bilden, oder alternativ der Teil der ersten Harzschicht (10) und der Teil der zweiten Harzschicht (20) miteinander in Berührung gebracht werden, um die Adhäsionsharzschicht (301) zu bilden, wobei die Fasernetzstruktur (302) bedeckt wird, um die Hybridschicht (30) zu bilden.

## Revendications

1. Composé de moulage de feuilles à fibres longues, comprenant : une première couche de résine (10), une seconde couche de résine (20) et une couche hybride (30) ; la couche hybride (30) est disposée entre la première couche de résine (10) et la seconde couche de résine (20), et la couche hybride (30) est couplée à la première couche de résine (10) et à la seconde couche de résine (20) ; la couche hybride (30) comprend une couche de résine d'adhérence (301) et une structure maillée de fibres (302) ;
dans lequel la structure de maillage de fibres (302) est recouverte par la couche de résine d'adhérence (301), la structure de maillage de fibres (302) est formée par une pluralité de soies de fibres (3021) qui sont discontinues et torsadées les unes par rapport aux autres, et les soies de fibres (3021) forment une pluralité d'espaces de soie de fibres (3022) entre elles ; les espaces de soie de fibre (3022) sont remplis avec la couche de résine d'adhérence (301), et les soies de fibre (3021) sont recouvertes par la couche de résine d'adhérence (301) ; une longueur moyenne des soies de fibre (3021) est supérieure ou égale à 35 mm ; **caractérisé en ce que**
les soies de fibres (3021) sont torsadées les unes par rapport aux autres pour avoir une distribution non directionnelle, dans laquelle la distribution non directionnelle signifie que la structure de maille de fibres (302) est projetée sur un plan bidimensionnel et les projections des soies de fibres (3021) projetées sur le plan bidimensionnel s'étendent de manière désordonnée dans des directions arbitraires ; et
une teneur totale en fibres du composé de moulage en feuille à fibres longues (1) est de 5 % en poids à 30 % en poids par rapport au composé de moulage en feuille à fibres longues (1).

2. Composé de moulage en feuille à fibres longues selon la revendication 1, dans lequel la longueur moyenne des soies de fibres (3021) est inférieure ou égale à 500 mm.

3. Composé de moulage de feuille à fibres longues selon la revendication 1, dans lequel les soies de fibres (3021) comprennent une pluralité de fibres (30211), les fibres (30211) ont une pluralité d'espaces de fibres (30213) entre elles, et la couche de résine d'adhérence (301) remplit les espaces de fibres (30213) entre les fibres (30211) pour couvrir les fibres (30211).

4. Composé de moulage de feuille à fibres longues selon la revendication 3, dans lequel au moins l'une des fibres (30211) associées à la soie de fibres (3021) est formée pour avoir deux naps (30212) indépendants l'un de l'autre.

5. Composé de moulage de feuille de fibres longues selon la revendication 4, dans lequel les boutons (30212) sont formés pour avoir la distribution non directionnelle.

6. Composé de moulage de feuille à fibres longues selon la revendication 5, dans lequel les fibres (30211) ont les nopes (30212).

7. Composé de moulage de feuille à fibres longues selon la revendication 3, dans lequel au moins une des soies de fibres (3021) et au moins une autre des soies de fibres (3021) sont torsadées l'une par rapport à l'autre pour avoir la distribution non directionnelle.

8. Composé de moulage de feuille à fibres longues selon la revendication 4, dans lequel au moins l'un des naps (30212) associés à au moins l'une des soies de fibres (3021) et au moins l'une des fibres associées à au moins une autre des soies de fibres (3021) sont tordus l'un à l'autre pour avoir la distribution non directionnelle.

9. Composé de moulage de feuille à fibres longues selon la revendication 4, dans lequel au moins un des noeuds (30212) associés à au moins une des soies de fibres (3021) et au moins un des noeuds (30212) associés à au moins une autre des soies de fibres (3021) sont tordus l'un par rapport à l'autre pour avoir la distribution non directionnelle.

10. Composé de moulage en feuille à fibres longues selon la revendication 1, dans lequel les soies de fibres (3021) sont choisies parmi les fibres de carbone ou les fibres de verre.

11. Composé de moulage en feuille à fibres longues selon la revendication 1, dans lequel la couche de résine d'adhérence (301), la première couche de résine (10) et la seconde couche de résine (20) sont constituées d'un même matériau ou de matériaux différents.

12. Composé de moulage de feuille à fibres longues selon la revendication 1, dans lequel les diamètres des soies de fibres (3021) sont de 3µm à 30µm.

13. Procédé de fabrication du composé de moulage de feuilles à fibres longues (1) selon la revendication 1, comprenant :
une étape de fourniture de matériau (S1) : fournir un premier film plastique (P1), la première couche de résine (10), la structure à mailles de fibres (302), la seconde couche de résine (20) et un second film plastique (P2), dans lequel la première couche de résine (10) est plaquée dans une surface inférieure du premier film plastique (P1), et la seconde couche de résine (20) est plaquée dans une surface supérieure du second film plastique (P2) ;
une étape d'adhésion (S2) : faire adhérer la première couche de résine (10) à une surface supérieure de la structure à mailles en fibres (302), et faire adhérer la deuxième couche de résine (20) à une surface inférieure de la structure à mailles en fibres (302) ; et
une étape de stratification (S3) : appliquer des forces de pression à une surface supérieure du premier film plastique (P1) et à une surface inférieure du second film plastique (P2), de sorte qu'une partie de la première couche de résine (10) forme la couche de résine d'adhérence (301) et recouvre la structure à mailles de fibres (302) pour former la couche hybride (30), ou alternativement, une partie de la deuxième couche de résine (20) forme la couche de résine d'adhérence (301) et recouvre la structure à mailles de fibres (302) pour former la couche hybride (30), ou alternativement, la partie de la première couche de résine (10) et la partie de la deuxième couche de résine (20) entrent en contact l'une avec l'autre pour former la couche de résine d'adhérence (301), et recouvrent la structure à mailles de fibres (302) pour former la couche hybride (30).
